# EUROPEAN PATENT APPLICATION

(11) **EP 4 708 536 A1**
(43) Date of publication of application: **11.03.2026**
(21) Application number: 25196598.4
(22) Date of filing: 19.08.2025
(51) Int. Cl.: H01M 50/383

(54) **BATTERY MODULE**

(30) Priority: 03.09.2024 KR 20240119304
(71) Applicant: SAMSUNG SDI CO., LTD., Yongin-si, Gyeonggi-do 17084 (KR)
(72) Inventor: HONG, Beom Seok, 16678 Suwon-si, Gyeonggi-do (KR); MOON, Pil Yong, 16678 Suwon-si, Gyeonggi-do, (KR)
(74) Representative: Gulde & Partner

(57) **Abstract**

A battery module (1000) includes a housing (1200) accommodating a plurality of battery cells (1100) in an internal space. A flow path (1300) extending in a first direction and configured to dispense a fire extinguishing agent (1310) into the internal space of the housing (1200). One or more partition walls (1400) extend in a second direction different from the first direction and divide the internal space of the housing (1200) into two or more sub-internal spaces.

## Description

### BACKGROUND

### 1. Field of the Disclosure

The present disclosure relates to a battery module including a flow path for spraying a fire extinguishing agent.

### 2. Discussion of Related Art

Unlike primary batteries that cannot be charged, secondary batteries are batteries that can be charged and discharged. Low-capacity secondary batteries are used in small, portable electronic devices such as smartphones, feature phones, notebook computers, digital cameras, and camcorders, and large-capacity secondary batteries are widely used as motor driving power sources and power storage batteries in hybrid vehicles, electric vehicles, etc. Such secondary batteries include an electrode assembly including a positive electrode and a negative electrode, a case (or can) that accommodates the electrode assembly, and an electrode terminal connected to the electrode assembly.

The secondary batteries may be used as a battery module formed by a plurality of secondary batteries connected in series and/or in parallel to provide high energy density. The battery module may be formed by connecting the secondary batteries to each other.

The information disclosed in this background section is intended only for improving the understanding of the background of the present disclosure and may therefore include information that does not constitute the related art.

### SUMMARY OF THE DISCLOSURE

The present disclosure is directed to providing a battery module including a flow path for spraying a fire extinguishing agent.

The present disclosure is also directed to providing a battery module in which the internal space of a housing is divided.

However, technical problems to be solved by the present disclosure are not limited to the problems described above, and other problems not mentioned can be clearly understood by those skilled in the art from the description below.

According to an aspect of the present disclosure, there is provided a battery module including a housing accommodating a plurality of battery cells in an internal space of the housing; a flow path extending in a first direction and configured to dispense a fire extinguishing agent into the internal space of the housing; and at least one partition wall extending in a second direction different from the first direction and dividing the internal space of the housing into two or more sub-internal spaces.

The at least one partition wall may divide the internal space into n sub-internal spaces, wherein the n is an integer greater than or equal to 2 and less than or equal to the number of battery cells.

The flow path may be formed from a heat-sensitive material that melts at a predetermined temperature or higher.

The flow path may be configured to dispense the fire extinguishing agent that includes a liquid or gaseous fire extinguishing agent.

A through hole is formed in the at least one partition wall, and the flow path may extend through the through hole to extend to each of the two or more sub-internal spaces.

The at least one partition wall may include a through hole adjacent portion that is adjacent to the through hole.

The at least one partition wall may include a through hole non-adjacent portion that is a region not adjacent to the through hole.

The through hole adjacent portion may be thicker than the through hole non-adjacent portion.

The at least one partition wall may further include a first support structure provided along a circumferential surface of the through hole.

The flow path may include a partition wall adjacent portion that extends through the through hole and is adjacent to the at least one partition wall.

The flow path may include a partition wall non-adjacent portion that is not adjacent to the at least one partition wall.

The partition wall adjacent portion may be thicker than the partition wall non-adjacent portion.

The battery module may further include a second support structure that wraps around at least a portion of the partition wall adjacent portion. The first and second support structure may be different support structures or the same support structure.

The at least one partition wall may include an insulating material.

The internal space may include a first sub-internal space and a second sub-internal space divided by the at least one partition wall, and a volume of the first sub-internal space may by greater than or equal to a volume of the second sub-internal space.

The flow path may be configured to dispense the fire extinguishing agent such that the fire extinguishing agent may fill at least one of the two or more sub-internal spaces at a predetermined rate or more.

The flow path may be configured to dispense the fire extinguishing agent such that the fire extinguishing agent may fill at least one of the two or more sub-internal spaces to a predetermined height or more.

The battery module may further include one or more insulating sheets provided in at least one of the gaps between the battery cells.

The at least one of the battery cells may include a first surface in contact with the one or more insulation sheets and may include a second surface in contact with the at least one partition wall.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings illustrate exemplary embodiments of the present disclosure and further describe aspects and features of the present disclosure together with the detailed description of the present disclosure. The present disclosure is not limited to the drawings.
FIG. 1 is a perspective view of a battery module according to an embodiment of the present disclosure;
FIG. 2 is a perspective view of a battery cell according to an embodiment of the present disclosure;
FIG. 3 is a cross-sectional view of the battery cell according to an embodiment of the present disclosure;
FIG. 4 illustrates the inside of a housing of the battery module;
FIG. 5 illustrates the inside of the battery module;
FIG. 6 illustrates the inside of the housing of the battery module according to an embodiment of the present disclosure;
FIG. 7 illustrates the inside of a battery module according to an embodiment of the present disclosure;
FIG. 8 is an enlarged view of section V shown in FIG. 6 according to an embodiment of the present disclosure;
FIG. 9 is an enlarged view of section V shown in FIG. 6 according to another embodiment of the present disclosure;
FIG. 10 is a top view of the battery module according to an embodiment of the present disclosure;
FIG. 11 illustrates the inside of the housing of the battery module according to an embodiment of the present disclosure; and
FIG. 12 illustrates the inside of the battery module according to an embodiment of the present disclosure.

### DETAILED DESCRIPTION OF EXEMPLARY EMBODIMENTS

Hereinafter, exemplary embodiments of the present disclosure will be described in detail with reference to the attached drawings. Terms or words used in this specification and claims should not be interpreted limited to ordinary or dictionary meanings and should be interpreted as meanings and concepts consistent with the technical idea of this disclosure based on the principle that the inventor can properly define the concept of the term in order to describe his or her invention in the best way. Accordingly, it is to be understood that the embodiments described herein, and the configurations illustrated in the drawings are only some of the most exemplary embodiments of the disclosure and do not represent all of the technical ideas of the disclosure, and that there may be various equivalents and modifications that may be replace for them at the time of filing. Furthermore, when used herein, the terms "comprise, include" and/or "comprising, including" specify the presence of the mentioned shapes, numbers, steps, operations, members, elements, and/or groups thereof and are not intended to exclude the presence or addition of one or more other shapes, numbers, operations, members, elements, and/or groups thereof. Also, when describing embodiments of the present disclosure, "may" or "may be" may include "one or more embodiments of the present disclosure."

In addition, in order to help understand the disclosure, the attached drawings are not drawn to actual scale, and the dimensions of some components may be exaggerated. In addition, the same reference numbers may be assigned to the same components in different embodiments.

The statement that two objects for comparison are 'equal' means 'substantially the same.' Therefore, substantially the same may include deviations that are considered low in the art, for example, deviations of less than 5%. Additionally, uniformity of a parameter over a given region may imply uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When any component is disposed "on (or under)" a component or "above (or below)" a component, it may mean not only that any component is disposed in contact with the component, but also that another component may be interposed between the component and any component disposed on (or under) the component.

Also, when one component is described as being "linked," "coupled," or "connected" to another component, it is to be understood that the components may be directly connected or coupled to each other, but that another component may be "interposed" between the components, or that each component may be "linked," "coupled," or "connected" through another component. Also, when a part is electrically connected to another part, this includes not only direct connections, but also connections with another element therebetween.

Throughout the specification, "A and/or B" means A, B, or A and B unless otherwise stated to the contrary. That is, "and/or" includes any or all combinations of a plurality of the listed items. When "C to D" is stated, it means greater than or equal to C and less than or equal to D unless otherwise specifically stated.

When a phrase such as "at least one of A, B, and C," "at least one of A, B, or C," "at least one selected from the group of A, B, and C," or "at least one selected from A, B, and C" is used to specify a list of elements A, B, and C, the phrase may refer to any suitable combination.

The term "use" may be considered synonymous with the term "utilize." As used herein, the terms "substantially," "about," and similar terms are used as terms of approximation, not as terms of degree, and are intended to take into account inherent variations in measured or calculated values that would be recognized by a person of ordinary skill in the art.

While terms such as first, second, third, and the like may be used herein to describe various elements, components, regions, layers, and/or sections, such elements, components, regions, layers, and/or sections are not intended to be limited by such terms. The terms are used to distinguish one element, component, area, layer, or section from another element, component, area, layer, or section. Thus, a first element, component, region, layer, or section discussed below may be named a second element, component, region, layer, or section without departing from the teachings of the exemplary embodiments.

To describe the relationship of one element or feature to another element(s) or feature(s) as illustrated in the drawings, spatially relative terms such as "beneath," "below," "lower," "above," "upper," and the like may be used herein for ease of description. It will be understood that spatially relative positions are intended to encompass different orientations of the device in use or operation in addition to the orientations depicted in the drawings. For example, when a device in a drawing is inverted, an element described as "under" or "below" another element is understood to be "on" or "above" the other element. Thus, the term "below" can encompass both up and down directions.

The terms used herein are intended to describe embodiments of the present disclosure and are not intended to limit the present disclosure.

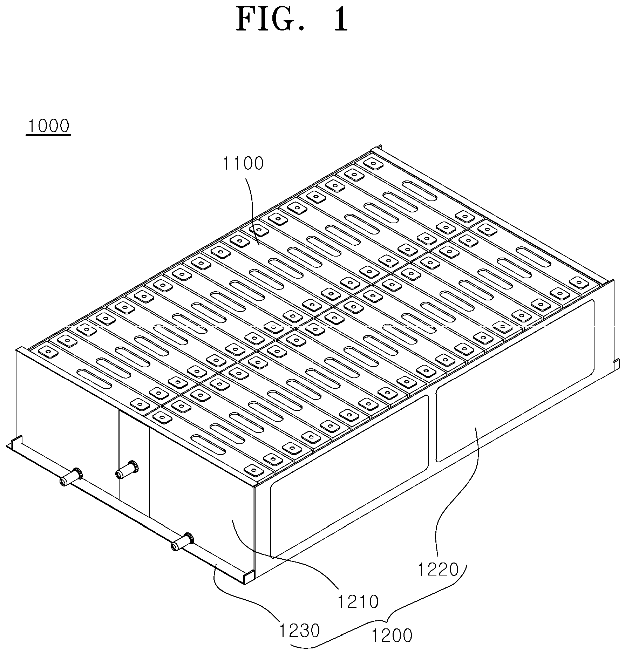

FIG. 1 is a perspective view of a battery module 1000 according to one embodiment of the present disclosure.

The battery module 1000 includes a plurality of battery cells 1100. A housing 1200 accommodates the plurality of battery cells 1100. The battery cells 1100 may function as a unit structure that stores and supplies power in the battery module 1000.

Each of the battery cells 1100 includes, for example, a battery cell in which a case 20 of the battery cell 1100 is formed in a prismatic shape. However, the shape of the battery cell 1100 applicable to the battery module 1000 according to embodiments of the present disclosure are not limited. For example, the battery cell 1100 may be formed in various shapes, such as a pouch shape, a cylindrical shape, coin shape, etc. Hereinafter, a case in which the battery cells 1100 of the battery module 1000 are formed in a prismatic shape will be described as an example.

The plurality of battery cells 1100 are disposed inside the housing 1200. In this case, the housing 1200 forms an appearance of the battery module 1000. The housing 1200 may function as a component that supports the plurality of battery cells 1100 as a whole.

The housing 1200 stores the plurality of battery cells 1100 in an internal space of the housing. The plurality of battery cells 1100 are arranged in a first direction in an internal space of the housing 1200. The first direction may be the same direction as a longitudinal direction of the battery module 1000.

Each battery cell 1100 includes a first side surface and a second side surface facing the first side surface. The first side surface and the second side surface include a wide surface of the battery cell 1100. In an example, the plurality of battery cells 1100 may be arranged such that a first side surface of one battery cell faces a second side surface of an adjacent battery cell. In this case, the first direction is a direction from the first side surface toward the second side surface.

The housing 1200 may include end plates 1210, side plates 1220, and a bottom plate 1230, which form an internal space that stores the battery cells 1100.

The end plates 1210 form a portion of a side surface of the housing 1200. For example, the end plate 1210 forms a side surface located in the first direction among the side surfaces of the housing 1200. Accordingly, the end plate 1210 may be formed facing a wide side surface of the battery cell 1100. For example, the end plates 1210 may be formed as two end plates facing each other to form both side surfaces of the housing 1200.

The battery cells 1100 may swell when they are repeatedly charged and discharged. The swelling may be more noticeable on the relatively wide side surface of the battery cells 1100. But the end plate 1210 may restrain the battery cell 1100 from swelling, and/or may support the exterior of the housing 1200.

The side plate 1220 forms a different portion of a side surface of the housing 1200. For example, the side plate 1220 forms a side surface that is located in a second direction among the side surfaces of the housing 1200. The second direction may be a direction perpendicular to the longitudinal direction of the battery module 1000, and the second direction may be a direction perpendicular to the first direction. For example, the side plate 1220 may be formed as a pair of two side plates facing each other to form two sides of the housing 1200. The side plates 1220 may be connected to a pair of end plates 1210 in which one side and the other side is different.

The bottom plate 1230 forms a bottom surface of the housing 1200. The bottom plate 1230 may support the plurality of battery cells 1100 from the bottom. The bottom plate 1230 may be connected to the end plates 1210 and the side plates 1220. With this configuration, the housing 1200 may include an internal space formed by the end plates 1210, the side plates 1220, and the bottom plate 1230.

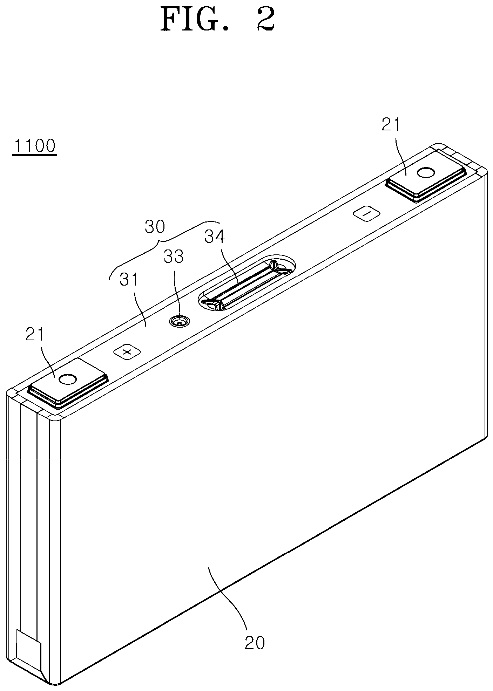

FIG. 2 is a perspective view of a battery cell according to an embodiment of the present disclosure.

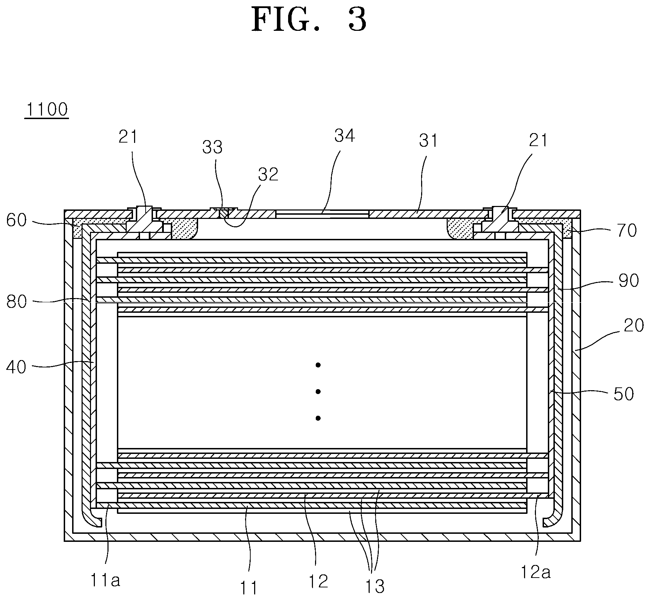

FIG. 3 is a cross-sectional view of the battery cell according to an embodiment of the present disclosure.

The battery cell 1100 according to an embodiment of the present disclosure may include at least one electrode assembly formed by winding a positive electrode 11 and a negative electrode 12 with a separator 13, which is an insulator, interposed therebetween, a case 20 in which the electrode assembly is accommodated, and a cap assembly 30 coupled to the case 20 to cover an opening in the case 20.

Hereinafter, an example of the battery cell 1100 as a prismatic lithium-ion secondary battery will be described. However, the present disclosure is not limited thereto, and the battery cell 1100 may be, for example, a lithium polymer battery or a cylindrical battery.

The positive electrode 11 and negative electrode 12 may include a coated portion that is a region in which a current collector formed of a thin sheet of metal foil is coated with an active material. The positive electrode 11 and negative electrode 12 may also include uncoated portions 11a and 12a that are regions in which the current collector is not coated with the active material.

The positive electrode 11 and negative electrode 12 may be wound with a separator 13, which is an insulator, interposed therebetween. However, the present disclosure is not limited thereto, and the electrode assembly may have a structure in which positive and negative electrodes are formed of a plurality of sheets and alternately stacked with a separator interposed therebetween.

The case 20 forms an exterior of the battery cell 1100 and may be formed of a conductive metal such as aluminum, an aluminum alloy, or nickel-plated steel. Additionally, the case 20 may provide a space in which the electrode assembly is accommodated.

The cap assembly 30 may include a cap plate 31 that covers an opening of the case 20. The case 20 and the cap plate 31 may be made of a conductive material. A terminal 21 electrically connected to the positive electrode 11 or the negative electrode 12 may pass through the cap plate 31 and protrude outward.

A pair of terminals 21 protruding outward from the cap plate 31 may be formed. The terminals 21 may be connected to the positive electrode 11 and the negative electrode 12 and may function as a positive terminal and a negative terminal of the battery cell 1100. More specifically, the terminals 21 may be electrically connected to current collectors including first and second current collectors 40 and 50 (hereinafter referred to as positive and negative electrode current collectors) welded to the positive uncoated portion 11a and negative uncoated portion 12a. For example, the terminals 21 may be welded to the positive and negative electrode current collectors 40 and 50, respectively. However, the present disclosure is not limited thereto, and the terminals 21 and the positive and negative electrode current collectors 40 and 50 may be integrally formed. An outer surface of an upper pillar of each of the terminals 21 may be threaded and may be fixed to the cap plate 31 with a nut. However, the present disclosure is not limited thereto, and the terminal 21 may be formed with a rivet structure and may be riveted or welded to the cap plate 31.

The cap plate 31 may be a thin plate and coupled to the opening of the case 20. An electrolyte inlet 32 in which a sealing cap 33 is provided may be formed in the cap plate 31. A vent 34 also may be formed in the cap plate 31.

The vent 34 may be opened and closed in response to changes in an internal pressure of the case 20. That is, the vent 34 is in a closed state to seal the case 20 during normal operation of the electrode assembly. The vent 34 may open as the internal pressure of the case 20 rises to a set magnitude or higher due to overcharging or the occurrence of a fire. Thus, emissions such as flames, gases, etc. may be discharged through the vent 34 from the inside to the outside of the case 20.

As shown in FIG. 3, an insulating member may be provided between the electrode assembly and the cap plate 31. The insulating member may include first and second lower insulating members 60 and 70. Each of the first and second lower insulating members 60 and 70 may be provided between the electrode assembly and the cap plate 31.

One end of a separating member may be provided facing a side of the electrode assembly, with the separating member being positioned between the insulating member and the terminal 21. The separating member may include first and second separating members 80 and 90. The first and second separating members 80 and 90, may be positioned between the first and second lower insulating members 60 and 70 and the positive electrode terminal 21 and the negative electrode terminal 21. As a result, the terminals 21 welded to the positive and negative electrode current collectors 40 and 50 may be coupled to ends of the first and second lower insulating members 60 and 70 and the first and second separating members 80 and 90.

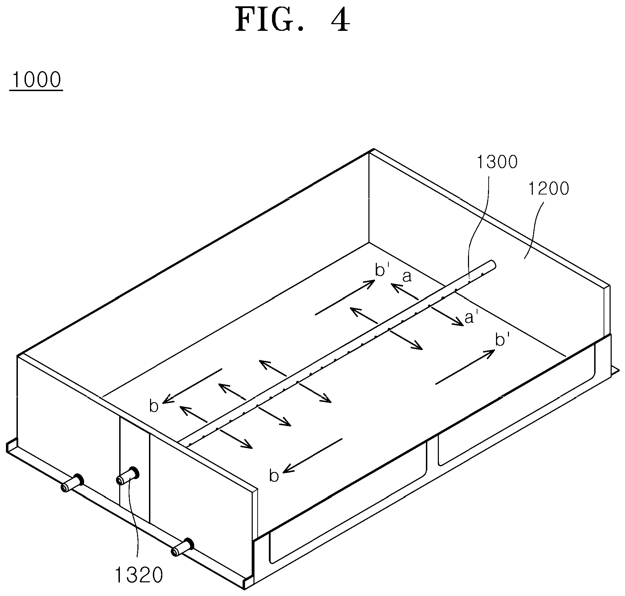

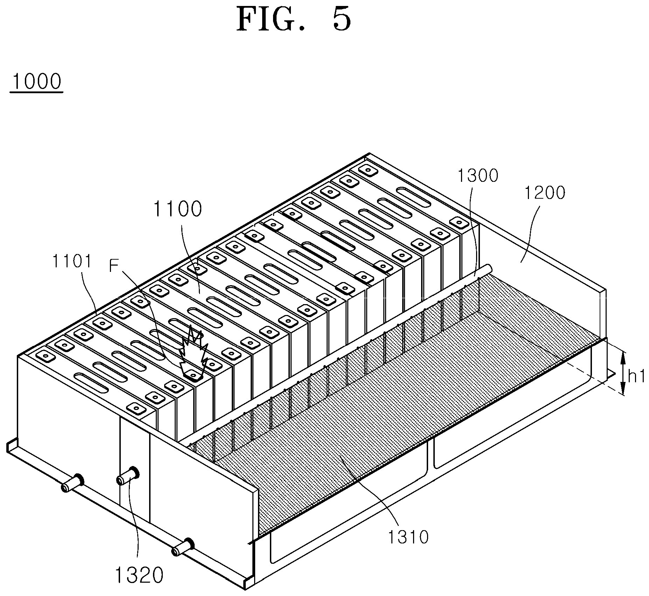

FIG. 4 illustrates the inside of a housing of the battery module. FIG. 5 illustrates the inside of the battery module.

As illustrated in FIG. 4, the battery module 1000 includes a flow path 1300. The flow path 1300 is formed in the internal space of the housing 1200. For example, the flow path 1300 is formed in the internal space of the housing 1200 in the first direction that corresponds to the longitudinal direction of the battery module 1000. The flow path 1300 is formed from the end plate 1210 formed at a first side toward the end plate 1210 formed at a second side.

The plurality of battery cells 1100 may form a battery structure arranged in the first direction. In addition, the plurality of battery cells 1100 may include two battery structures arranged in a width direction of the battery module 1000. In this arrangement, the width direction of the battery module 1000 may be a direction perpendicular to the longitudinal direction of the battery module 1000. However, the plurality of battery cells 1100 are not limited to this arrangement and may be arranged in one row or three or more rows in the second direction. An example is described herein in which the plurality of battery cells 1100 form two rows in the width direction of the battery module 1000, but the present disclosure is not limited to such an arrangement. In the depicted arrangement, the plurality of battery cells 1100 includes, a battery structure in which battery cells are arranged in the first direction. The battery structure also includes a first battery structure and a second battery structure arranged in two rows in the width direction of the battery module 1000.

As viewed from above, the flow path 1300 may be arranged between the first battery structure and the second battery structure. The flow path 1300 may be provided on an upper portion of the battery cell 1100 or may be provided on a side portion of the battery cell 1100.

Although not illustrated in FIGS. 4 and 5, the flow path 1300 may be connected to a fire extinguishing agent storage tank located outside the housing 1200 through a pipe 1320 that extends from the housing 1200. The flow path 1300 may be supplied with a fire extinguishing agent from the fire extinguishing agent storage tank. The fire extinguishing agent may include a liquid fire extinguishing agent. For example, the fire extinguishing agent may include at least one of sulfuric acid, potassium carbonate, sodium bicarbonate, aluminum sulfate, water, halons, halogen compounds, and combinations thereof. However, fire extinguishing agent according to the present invention is not limited to these examples and may include, for example, solid fire extinguishing agents, gaseous fire extinguishing agents, etc.

The flow path 1300 may be formed of a heat-sensitive material that melts above a predetermined temperature. The predetermined temperature may be the ignition temperature of the battery cell 1100. The predetermined temperature may be, for example, 100 °C to 150 °C. In other examples, the predetermined temperature is 110 °C to 150 °C, or 100 °C to 140 °C, or 110 °C to 140 °C, or 110 °C to 130 °C, or 110 °C to 120 °C. When the predetermined temperature is less than 100 °C, the flow path 1300 may melt during the simple charging and discharging process of the battery cells 1100. In this case, the use of the battery module 1000 is compromised. When the predetermined temperature is greater than 150 °C, the flow path 1300 may not melt until long after a fire F occurs in the battery cell 1100. Thus, suppression of the fire F may be delayed and the cooling effect of the battery module 1000 is reduced. Thus, it is preferable that the predetermined temperature is, for example, 100 °C to 150 °C.

The heat-sensitive material includes polyamide 12 (PA12) material. Alternatively, for example, the heat-sensitive material may include high density polyethylene (HDPE), linear low density polyethylene (LLDPE), low density (LDPE), acrylonitrile butadiene styrene (ABS), alpha-methyl styrene acrylonitrile (AMSAN), etc. For example, the flow path 1300 may be formed as a tube made of PA12 material.

As the flow path 1300 melts at a predetermined temperature or higher, the flow path 1300 releases the fire extinguishing agent in the flow path 1300. As the flow path 1300 is located in the internal space of the housing 1200, the flow path 1300 may release the fire extinguishing agent 1310 into the internal space of the housing 1200.

As illustrated in FIG. 5, a fire F may occur in at least one of the plurality of battery cells 1100 (hereinafter, referred to as an event cell 1101). In this case, the flow path 1300 located adjacent to the event cell 1101 may melt by the heat of the fire F. The melted flow path 1300 may release the fire extinguishing agent 1310 toward the battery cell 1100 (e.g., in a and a' directions shown in FIG. 4). The fire extinguishing agent 1310 may be released toward the battery cell 1100 and then spread out into the internal space of the housing 1200 (e.g., in b and b' directions). Accordingly, the fire extinguishing agent 1310 may rise to a height of h1 in the internal space of the housing 1200 and may cool the event cell 1101. Further, the fire extinguishing agent 1310 may also cool the battery cells adjacent to the event cell 1101 (hereinafter referred to as "adjacent cells").

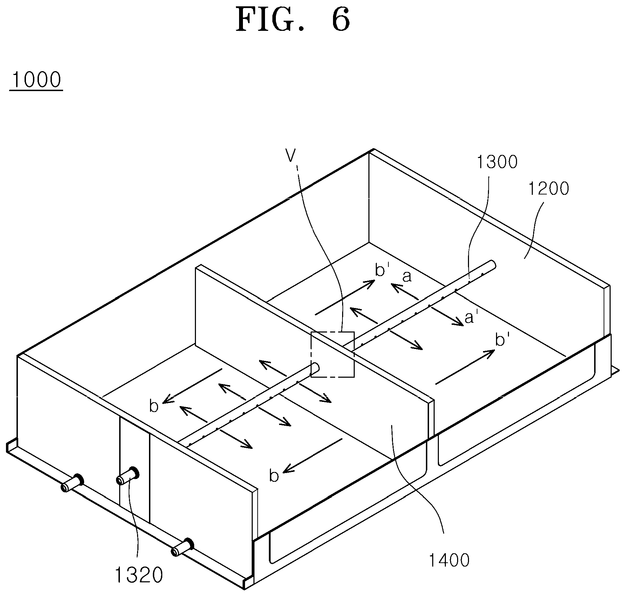

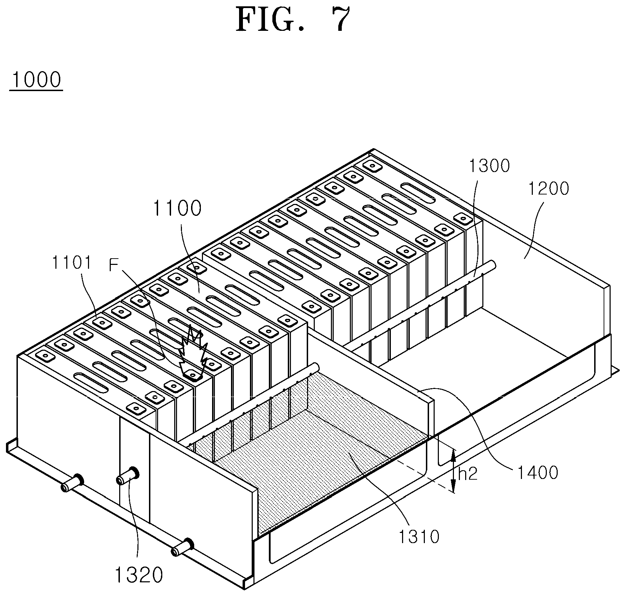

FIG. 6 illustrates the inside of the housing of the battery module according to an embodiment of the present disclosure. FIG. 7 illustrates the inside of a battery module according to an embodiment of the present disclosure.

As described above, a battery module 1000 may include a flow path 1300. In this way, the battery module 1000 may quickly cool the plurality of battery cells 1100 even when the fire F occurs in the event cell 1101 by releasing the fire extinguishing agent 1310 through the flow path 1300.

The temperature of the event cell 1101 or adjacent cells of the plurality of battery cells 1100 may increase as the fire F occurs in the event cell 1101. But the temperatures of the battery cells located far from the event cell 1101 may not increase despite the fire F in the event cell 1101. As such, it may be more efficient for the fire extinguishing agent to cool only the event cell 1101 and adjacent cells rather than all of the battery cells 1100 included in the battery module 1000. Hereinafter, a method for improving cooling efficiency of the battery module 1000 will be described in detail.

Referring to FIGS. 5 and 6, the battery module 1000 according to an embodiment of the present disclosure includes the housing 1200 that stores the plurality of battery cells 1100. The flow path 1300 is formed to extend in the first direction of the battery module 1000 and sprays the fire extinguishing agent into the internal space of the housing 1200. One or more partition walls 1400 extend in the second direction that is different from the first direction and divides the internal space of the housing 1200 into two or more sub-internal spaces.

The battery module 1000 includes the partition wall 1400 located inside the housing 1200. The partition wall 1400 divides the internal space of the housing 1200. The partition wall 1400 is formed to extend in a direction different from the direction in which the flow path 1300 extends. For example, the flow path 1300 may be formed to extend in the first direction, and the partition wall 1400 may be formed to extend in the second direction that is perpendicular to the first direction.

One side of the partition wall 1400 is connected to the side plate 1220 on a first side of the housing 1200, and the other side of the partition wall 1400 is connected to the side plate 1220 on a second side of the housing 1200. In this case, the partition wall 1400 may be provided parallel to the end plate 1210. However, the arrangement of the partition wall 1400 may vary depending on the shape or arrangement relationship of the battery cells 1100. For example, the partition wall 1400 may be provided at an oblique angle with respect to the end plate 1210.

As described above, a plurality of battery cells 1100 are accommodated in the internal space of the housing 1200. Accordingly, the partition wall 1400 extend through at least one of the gaps between the plurality of battery cells 1100 in the internal space. Thus, the partition wall 1400 may divide a single battery structure into two or more battery structures. More specifically, the partition wall 1400 divides the internal space of the housing 1200 into n sub-internal spaces, where n is a natural number greater than or equal to 2. In addition, n is an integer equal to or less than the number of battery cells 1100.

As described above, the partition wall 1400 may be provided to pass through at least one gap between the plurality of battery cells 1100. Accordingly, the partition wall 1400 divides the internal space of the housing 1200 into at least two sub-internal spaces. That is, the partition wall 1400 may divide the internal space of the housing 1200 into as many sub-internal spaces as the number of battery cells 1100.

In an example embodiment, the plurality of battery cells 1100 may include one battery structure arranged in one row. In this case, one battery cell 1100 may be located in one sub-internal space. In another example embodiment, the plurality of battery cells 1100 may include two battery structures arranged in two rows in a width direction. In this case, the one sub-internal space may include two battery cells 1100 arranged in two rows. That is, the one sub-internal space may include a pair of battery cells 1100.

When the plurality of battery cells 1100 include a single battery structure, n may be an integer equal to or less than the number battery cells 1100. Alternatively, when the plurality of battery cells 1100 includes a plurality of battery structures, n may be an integer equal to or less than the number of battery cells included in one battery structure.

Although not illustrated in FIGS. 6 and 7, when the plurality of battery structures arranged in two or more rows, the battery module 1000 may further include one or more blocks positioned between the plurality of battery structures. In this case, the two or more rows of battery cells 1100 located in one sub-internal space may be further divided by the blocks.

As described in FIGS. 4 and 5, the flow path 1300 may be formed from a heat-sensitive material that melts above a predetermined temperature. In addition, the fire extinguishing agent 1310 may include a liquid fire extinguishing agent. Alternatively, the fire extinguishing agent 1310 may include at least one of liquid, solid, and gaseous fire extinguishing agents, and combinations thereof. The flow path 1300 and/or the fire extinguishing agent 1310 are the same or similar to that described in FIGS. 4 and 5.

In the case of the battery module 1000 according to FIGS. 4 and 5, which does not include the partition wall 1400, when a fire occurs in the event cell 1101, the entire internal space of the housing 1200 may be impregnated with the fire extinguishing agent 1310 that is released as the flow path 1300 melts. On the other hand, in the case of the battery module 1000 including the partition wall 1400, when a fire occurs in the event cell 1101, only a part of the internal space of the housing 1200, rather than the entire internal space, may be impregnated with the fire extinguishing agent 1310. For example, among the divided internal spaces, only the sub-internal space in which the event cell 1101 is located may be impregnated with the fire extinguishing agent 1310. In this way, the battery module 1000 according to an embodiment of the present disclosure may improve the efficiency of cooling by the fire extinguishing agent 1310. For example, the battery module 1000 may improve cooling performance and/or reduce the amount of fire extinguishing agent required.

The fire extinguishing agent 1310 may fill at least one of the two or more sub-internal spaces at a predetermined rate or more. In this case, the predetermined rate is a rate at which the fire extinguishing agent 1310 fills the internal space not divided by the partition wall 1400. For example, the fire extinguishing agent 1310 may fill the internal space not divided by the partition wall 1400 to a predetermined height h1 as illustrated in FIG. 5 at a predetermined rate. On the other hand, the fire extinguishing agent 1310 may fill the sub-internal space divided by the partition wall 1400 to a height h2, which is the same height as the predetermined height h1. In this case, as the battery module 1000 is divided, the fire extinguishing agent 1310 fills the narrower internal space to the same height. Accordingly, the fire extinguishing agent 1310 may fill the sub-internal space faster than the predetermined rate. In this way, when the battery module 1000 includes the partition wall 1400, the fire extinguishing agent 1310 fills the sub-internal space at a faster rate than when the partition wall 1400 is not provided to the battery module 1000.

In another example, the fire extinguishing agent 1310 may fill at least one of the two or more sub-internal spaces to a predetermined height or more. The predetermined height is reached when the fire extinguishing agent 1310 fills the internal space not divided by the partition wall 1400. For example, the fire extinguishing agent 1310 may fill the internal space not divided by the partition wall 1400 to the predetermined height h1 as illustrated in FIG. 5. On the other hand, when the flow path 1300 carries the same amount of fire extinguishing agent 1310, as illustrated in FIG. 7 the fire extinguishing agent 1310 may fill the sub-internal space divided by the partition wall 1400 to the predetermined height h2, which is higher than the predetermined height. In this way, when the battery module 1000 includes the partition wall 1400, the fire extinguishing agent 1310 fills the sub-internal space to a higher height than when the partition wall 1400 is not provided.

As described above, battery module 1000 according to embodiments of the present disclosure may efficiently cool all battery cells (e.g., the event cell 1101, adjacent cells, etc.) through the partition wall 1400.

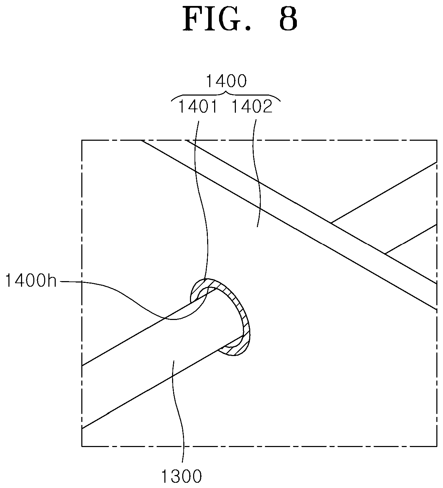

FIG. 8 is an enlarged view of section V depicted in FIG. 6 according to an embodiment of the present disclosure.

The partition wall 1400 may include at least one through hole 1400h. The flow path 1300 may extend through the through hole 1400h to extend to each of the two or more sub-internal spaces. In some embodiments, the flow path 1300 over an upper side of the partition wall 1400. But, in other embodiments as depicted in FIG. 8, the flow path 1300 may extend through the through hole 1400h formed in the partition wall 1400. The shape of the through hole 1400h may correspond to the flow path 1300 so that the flow path 1300 may extend through the through hole 1400h. That is, the size of the through hole 1400h may corresponding to the size of the flow path 1300. For example, when the flow path 1300 is f a tube with a circular cross-section, the through hole 1400h may be formed in the shape of a circle with a diameter greater than or equal to the diameter of the flow path 1300.

As described above, when the fire F occurs in the event cell 1101, the flow path 1300 melts in a portion of the area adjacent to the event cell 1101. That is, the flow path 1300 melts in the sub-internal space that includes the event cell 1101. On the other hand, the flow path 1300 does not need to melt in the sub-internal space that does not include the event cell 1101. This is because cooling efficiency is less when the flow path 1300 melts in the sub-internal space that does not include the event cell 1101. Accordingly, the flow path 1300 does not need to melt on the other side of the partition wall 1400 with the partition wall 1400 interposed therebetween.

In a partition wall 1400 that includes a through hole 1400h, a through hole adjacent portion 1401 is formed adjacent to the through hole 1400h and a through hole non-adjacent portion 1402 is a region not adjacent to the through hole 1400h. The through hole adjacent portion 1401 may be formed thicker than the through hole non-adjacent portion 1402. In this case, the through hole adjacent portion 1401 includes a region adjacent to the through hole 1400h in the partition wall 1400, such as a region located within a first distance from the through hole 1400h. The first distance may be, for example, 0.1 mm or more and 20 mm or less.

The through hole adjacent portion 1401 may be formed thicker than the through hole non-adjacent portion 1402. For example, when viewed from above the battery module 1000, the through hole adjacent portion 1401 may be thicker than the through hole non-adjacent portion 1402. In this arrangement, the through hole adjacent portion 1401 and the through hole non-adjacent portion 1402 may be connected in a streamlined manner with a curved surface. The thickness of the partition wall 1400 may gradually decrease from the through hole adjacent portion 1401 toward the through hole non-adjacent portion 1402. Alternatively, the through hole adjacent portion 1401 and the through hole non-adjacent portion 1402 may be connected to form a step. That is, the thickness of the partition wall 1400 may decrease stepwise from the through-hole adjacent portion 1401 toward the through-hole non-adjacent portion 1402.

In other embodiments, the partition wall 1400 may further include a first support structure (not shown) provided along an inner circumferential surface of the through hole 1400h. The first support structure may improve the rigidity of the partition wall 1400. The first support structure includes, for example, an insulating material. The insulating material may include, for example, at least one of polyimide (PI), polysulfone (PU), polyurethane (PU), polyamide (PA), 6,6 nylon, polycarbonate (PC), polytetrafluoroethylene (PTFE), polymethyl methacrylate (PMMA), polyethylene terephthalate (PET), and combinations thereof. The first support structure may further include an adhesive material that adheres the insulating material to the partition wall 1400 to be fixed to an inner circumferential surface of the through hole 1400h. The adhesive material may include at least one of, for example, a silicone resin, an acrylic resin, a urethane resin, a rubber resin, an epoxy resin, a polyolefin, and combinations thereof.

Additionally, although not illustrated, the partition wall 1400 may include both the relatively thickly formed through hole adjacent portion 1401 and the first support structure.

As such, the battery module 1000 according to embodiments of the present disclosure includes a method of securing the rigidity of the partition wall 1400 in contact with the flow path 1300. When the flow path 1300 on one side melts, the partition wall 1400 supports the flow path 1300 at the through hole 1400h and prevents heat from being transmitted beyond the partition wall 1400. Accordingly, cooling efficiency in the battery module 1000 may be improved.

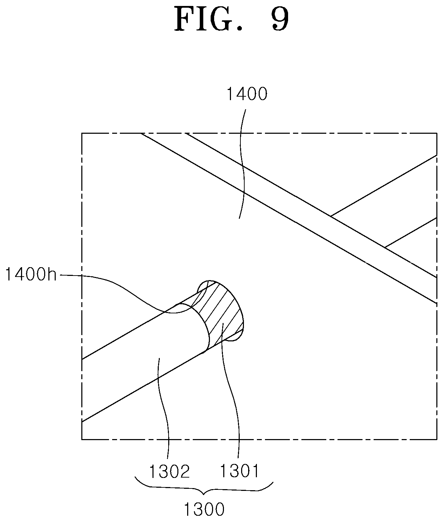

FIG. 9 is an enlarged view of section V of FIG. 6 according to another embodiment of the present disclosure.

At least one through hole 1400h is formed in the partition wall 1400, and the flow path 1300 may extend through the through hole 1400h to extend to each of the two or more sub-internal spaces. That is, in some embodiments, the flow path 1300 may pass over an upper side of the partition wall 1400. In other embodiments, the flow path 1300 may extend through a through hole 1400h formed in the partition wall 1400 as illustrated in FIG. 9. The through hole 1400h is the same or similar to that described in FIG. 8.

As described above, the flow path 1300 does not need to melt on the side of the partition wall 1400 that is opposite to the side where a fire, etc. occurs in the battery cells.

As shown in FIG. 9, the flow path 1300 includes a partition wall adjacent portion 1301 that extends through the through hole 1400h and is adjacent to the partition wall 1400 and a partition wall non-adjacent portion 1302 that is not adjacent to the partition wall 1400. The partition wall adjacent portion 1301 may be formed thicker than the partition wall non-adjacent portion 1302.

In this case, the partition wall adjacent portion 1301 includes a region adjacent to the partition wall 1400 in the flow path 1300. This is a portion that passes through the partition wall 1400 or is located within a second distance from the partition wall 1400. The second distance may be, for example, 0.1 mm or more and 30 mm or less. The partition wall adjacent portion 1301 may be formed thicker than the partition wall non-adjacent portion 1302. In this case, the partition wall adjacent portion 1301 and the partition wall non-adjacent portion 1302 may be connected in a streamlined manner by a curved surface. In this case, the thickness of the flow path 1300 may gradually decrease from the partition wall adjacent portion 1301 toward the partition wall non-adjacent portion 1302. Alternatively, the partition wall adjacent portion 1301 and the partition wall non-adjacent portion 1302 may be connected to form a step. That is, the thickness of the flow path 1300 may decrease stepwise from the partition wall adjacent portion 1301 toward the partition wall non-adjacent portion 1302.

The battery module 1000 may further include a second support structure (not shown) that wraps around at least a portion of the partition wall adjacent portion 1301. The second support structure may improve the rigidity of the flow path 1300. The second support structure may include an insulating material. The insulating material may include, for example, at least one of polyimide, polysulfone, polyurethane, polyamide, 6,6 nylon, polycarbonate, polytetrafluoroethylene, polymethyl methacrylate, polyethylene terephthalate, and combinations thereof.

The second support structure may further include an adhesive material that adheres the insulating material to the flow path 1300 to be fixed to the partition wall adjacent portion 1301. The adhesive material may include at least one of, for example, a silicone resin, an acrylic resin, a urethane resin, a rubber resin, an epoxy resin, a polyolefin, and combinations thereof.

Additionally, although not illustrated, the flow path 1300 may include both the relatively thickly formed partition wall adjacent portion 1301 and the second support structure.

As such, the battery module 1000 according to an embodiment of the present disclosure includes a method of securing the rigidity of the flow path 1300 in contact with the partition wall 1400. Even when the flow path 1300 on one side of the partition wall 1400 melts, the battery module 1000 may prevent the flow path from melting by the partition wall adjacent portion 1301. Accordingly, cooling efficiency may be improved.

Although not illustrated in FIGS. 8 and 9, the partition wall 1400 and/or the flow path 1300 according to one embodiment of the present disclosure may be combined and applied to the battery module 1000 in one or more combinations. For example, the battery module 1000 may include the flow path 1300 and the partition wall 1400 in which the through hole 1400h is formed and through which the flow path 1300 extends. In this case, the partition wall 1400 may include the through hole adjacent portion 1401 that is relatively thick and/or the first support structure, and the flow path 1300 may include the partition wall adjacent portion 1301 that is relatively thick and/or the second support structure. Accordingly, cooling efficiency in the battery module may be improved.

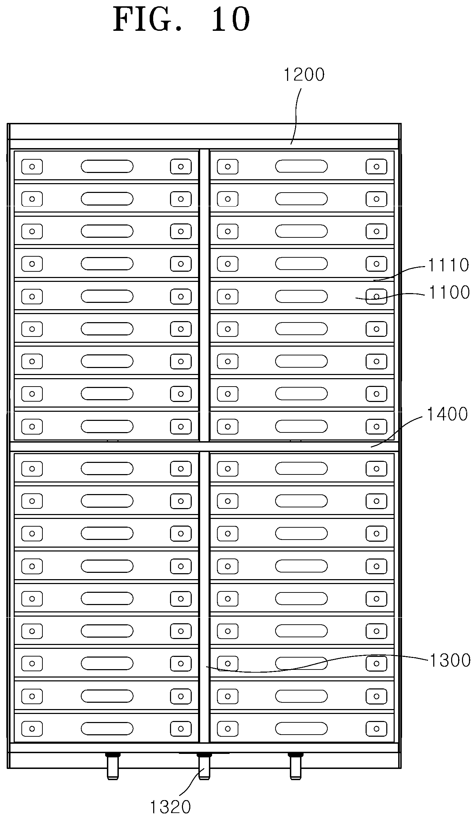

FIG. 10 is a top view of the battery module according to an embodiment of the present disclosure.

As illustrated in FIG. 10, the battery module 1000 includes the plurality of battery cells 1100, the housing 1200, the flow path 1300, and the partition wall 1400. In this case, the partition wall 1400 may include an insulating material. Accordingly, the partition wall 1400 may function as an insulating sheet for the plurality of battery cells 1100. The insulating material includes, for example, a first material that allows the partition wall 1400 to have insulating properties. The first material may include at least one of, for example, aerogel, wet silica, dry silica, polyurethane, polystyrene, polyethylene, polyester, and combinations thereof.

In another embodiment, the insulating material may include a second material that has insulating and/or heat-resistant properties while maintaining the shape of the partition wall 1400. The second material may include at least one of, for example, mica, fiber, cement, talc, diatomaceous earth, bentonite, silica, elvan, kaolin, polyimide, polyethylene terephthalate, and combinations thereof.

The partition wall 1400 may be formed of a single layer including the first material or the second material. Alternatively, the partition wall 1400 may be formed of a plurality of layers formed by stacking a layer including the first material and a layer including the second material. For example, the partition wall 1400 may be formed as a sandwich structure in which the first material is formed on both surfaces of the second material.

The battery module 1000 may further include one or more insulation sheets 1110 provided in at least one of the gaps between the plurality of battery cells 1100. The insulation sheet 1110 may be located in a region where the partition wall 1400 is not provided. In such a case, at least one of the plurality of battery cells 1100 may have one surface in contact with the insulation sheet 1110 and the other surface in contact with the partition wall 1400. In this way, the partition wall 1400 according to one embodiment of the present disclosure may function similar that of an insulation sheet while also improving cooling efficiency. Thus, the battery module 1000 may further include the insulation sheet 1110 to insulate between the battery cells 1100.

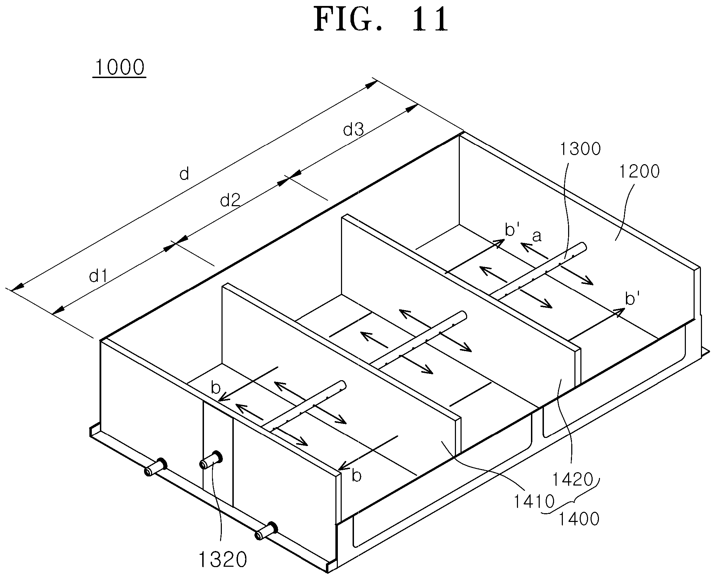

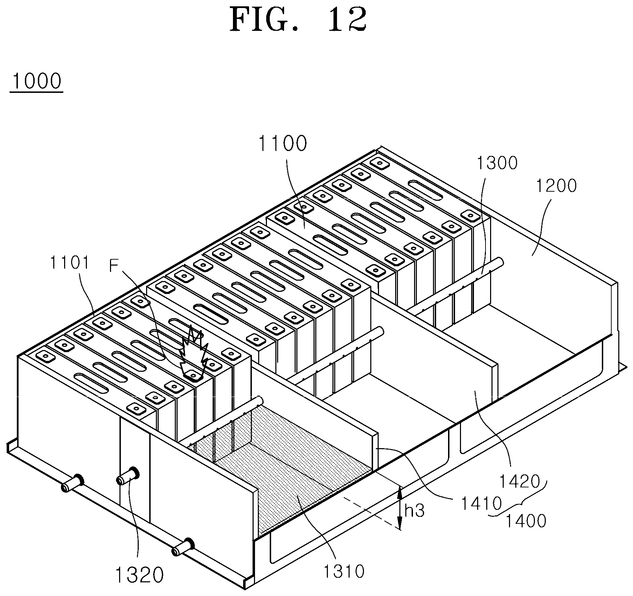

FIG. 11 illustrates the inside of the housing of the battery module according to an embodiment of the present disclosure. FIG. 12 illustrates the inside of the battery module according to an embodiment of the present disclosure.

The battery module 1000 includes the housing 1200 that accommodates the plurality of battery cells 1100. The flow path 1300 extends in the first direction and dispenses the fire extinguishing agent into the internal space of the housing 1200. One or more partition walls 1400 extend in the second direction different from the first direction and divide the internal space of the housing 1200 into two or more sub-internal spaces. The plurality of partition walls 1400 may be spaced apart from each other at equal intervals.

For example, the battery module 1000 may include a first partition wall 1410 and a second partition wall 1420, which are spaced apart from each other. As illustrated in FIG. 11, the housing 1200 may be formed to have a distance d in the longitudinal direction of the battery module 1000. In this case, the first partition wall 1410 and the end plate 1210 on one side may be formed with a distance d1 therebetween. The first partition wall 1410 and the second partition wall 1420 may be formed with a distance d2 therebetween. The second partition wall 1420 and the end plate 1210 on the other side may be formed with a distance d3 therebetween. In this case, d1, d2, and d3 may all be equal, i.e., each of d1, d2, and d3 may have a value of d/3. Accordingly, each of the sub-internal spaces divided by the partition walls 1400 spaced at equal intervals may all have the same volume. But in another embodiment at least some of the plurality of partition walls 1400 may be spaced apart from each other at different distances.

With the arrangement shown in FIG. 11, as illustrated in FIG.12 the fire extinguishing agent 1310 may be 4dispensed into a smaller space to impregnate the battery cell 1100. Accordingly, the fire extinguishing agent 1310 may impregnate the battery cell 1100 to a height h3. Alternatively, the fire extinguishing agent 1310 may impregnate the battery cell 1100 faster than the predetermined rate.

The partition wall 1400 divides the internal space into n sub-internal spaces, where n is an integer greater than or equal to 2 and less than or equal to the number of the plurality of battery cells 1100. The sub-internal spaces may include a first sub-internal space, and a second sub-internal space divided by the partition wall 1400, and the volume of the first sub-internal space may be greater than or equal to the volume of the second sub-internal space.

In examples, at least one of d1, d2, and d3 be different than the others, i.e., at least one of d1, d2, and d3 may have a value less than d/3. Accordingly, each of the plurality of sub-internal spaces may have different volumes. With this arrangement, the sub-internal space with a relatively high probability of ignition may be formed with a larger volume. In addition or in alternative, the sub-internal space with a relatively low probability of ignition may be formed with a smaller volume.

Accordingly, the battery module 1000 may provide an environment in which the battery cells 1100 with a relatively high probability of ignition may be more intensively cooled during an ignition event.

According to embodiments of the present disclosure, a battery module with improved cooling efficiency is provided. For example, according to embodiments of the present disclosure, cooling rate can be improved. As another example, according to embodiments of the present disclosure, the amount of fire extinguishing agent can be reduced.

However, the effects obtained through the present disclosure are not limited to the above-described effects, and other technical effects that are not mentioned will be clearly understood by those skilled in the art from the description herein.

The present disclosure has been described with reference to embodiments illustrated in the drawings, which are merely exemplary. Those having ordinary skill in the art will understand that various modifications are possible within the scope of the present invention as defined by the appended claims.

## Claims

1. A battery module (1000) comprising:
a housing (1200) accommodating a plurality of battery cells (1100) in an internal space of the housing (1200);
a flow path (1300) extending in a first direction and configured to dispense a fire extinguishing agent (1310) into the internal space of the housing (1200); and
at least one partition wall (1400) extending in a second direction different from the first direction and dividing the internal space of the housing (1200) into two or more sub-internal spaces.

2. The battery module (1000) of claim 1, the at least one partition wall (1400) divides the internal space into n sub-internal spaces, wherein the n is an integer greater than or equal to 2 and less than or equal to the number of battery cells (1100).

3. The battery module (1000) of claim 1 or 2, wherein the flow path (1300) is formed from a heat-sensitive material that melts at a predetermined temperature or higher.

4. The battery module (1000) of any one of the preceding claims, wherein the flow path (1300) is configured to dispense the fire extinguishing agent (1310) that includes a liquid or gaseous fire extinguishing agent (1310).

5. The battery module (1000) of any one of the preceding claims, wherein a through hole (1400h) is formed in the at least one partition wall (1400), and
wherein the flow path (1300) extends through the through hole (1400h) to extend to each of the two or more sub-internal spaces.

6. The battery module (1000) of claim 5, wherein the at least one partition wall (1400) includes:
a through hole adjacent portion (1401) that is adjacent to the through hole (1400h); and
a through hole non-adjacent portion (1402) that is a region not adjacent to the through hole (1400h), and
wherein the through hole adjacent portion (1401) is thicker than the through hole non-adjacent portion (1402).

7. The battery module (1000) of claim 5 or 6, wherein the at least one partition wall (1400) further includes a first support structure provided along a circumferential surface of the through hole (1400h).

8. The battery module (1000) of any one of claims 5 to 7, wherein the flow path (1300) includes:
a partition wall adjacent portion (1301) that extends through the through hole (1400h) and is adjacent to the at least one partition wall (1400); and
a partition wall non-adjacent portion (1302) that is not adjacent to the at least one partition wall (1400).

9. The battery module (1000) of claim 8, wherein the partition wall adjacent portion (1401) is thicker than the partition wall non-adjacent portion (1302), and/or
wherein the battery module (1000) further includes a second support structure that wraps around at least a portion of the partition wall adjacent portion (1401).

10. The battery module (1000) of any one of the preceding claims, wherein the at least one partition wall (1400) includes an insulating material.

11. The battery module (1000) of any one of the preceding claims, wherein the internal space includes a first sub-internal space and a second sub-internal space divided by the at least one partition wall (1400), and
wherein a volume of the first sub-internal space is greater than or equal to a volume of the second sub-internal space.

12. The battery module (1000) of any one of the preceding claims, wherein the flow path (1300) is configured to dispense the fire extinguishing agent (1310) such that the fire extinguishing agent (1310) fills at least one of the two or more sub-internal spaces at a predetermined rate or more.

13. The battery module (1000) of any one of the preceding claims, wherein the flow path (1300) is configured to dispense the fire extinguishing agent (1310) such that the fire extinguishing agent (1310) fills at least one of the two or more sub-internal spaces to a predetermined height or more.

14. The battery module (1000) of any one of the preceding claims, wherein the battery module (1000) further includes one or more insulating sheets provided in at least one of the gaps between the battery cells (1100).

15. The battery module (1000) of claim 14, wherein at least one of the battery cells (1100) includes a first surface in contact with the one or more insulation sheets (1110) and a second surface in contact with the at least one partition wall (1400).
